Europäisches Patentamt

European Patent Office

Office européen des brevets

(19)

(11) Numéro de publication: **0 187 058 B1**

(12) **FASCICULE DE BREVET EUROPEEN**

(45) Date de publication du fascicule du brevet:
20.12.89

(51) Int. Cl.⁴: **G 02 F 1/35**

(21) Numéro de dépôt: 85402184.7

(22) Date de dépôt: 12.11.85

(54) Source optique monomode et dispositif amplificateur optique accordable dans le proche infrarouge.

(30) Priorité: 16.11.84 FR 8417556

(43) Date de publication de la demande:
09.07.86 Bulletin 86/28

(45) Mention de la délivrance du brevet:
20.12.89 Bulletin 89/51

(84) Etats contractants désignés:
DE FR GB NL SE

(73) Titulaire: THOMSON-CSF, 51, Esplanade du Général de Gaulle, F-92800 Puteaux (FR)

(72) Inventeur: Pocholle, Jean-Paul, THOMSON-CSF SCPI 173, bld Haussmann, F-75379 Paris Cedex 08 (FR)
Inventeur: Raffy, Jean, THOMSON-CSF SCPI 173, bld Haussmann, F-75379 Paris Cedex 08 (FR)
Inventeur: Papuchon, Michel, THOMSON-CSF SCPI 173, bld Haussmann, F-75379 Paris Cedex 08 (FR)

(74) Mandataire: Lepercque, Jean et al, THOMSON-CSF SCPI, F-92045 PARIS LA DEFENSE CEDEX 67 (FR)

(56) Documents cités:
US-A- 3 875 422

OPTICS LETTERS, vol. 6, no. 5, mai 1981, pages 213-215, Optical Society of America, New York, US; R.H. STOLEN et al.: "Phase matching in birefringent fibers"
APPLIED PHYSICS LETTERS, vol. 36, no. 3, février 1980, pages 178-180, American Institute of Physics, New York, US; N. UESUGI: "Parametric difference frequency generation in a three-dimensional LiNbO3 optical waveguide"
APPLIED PHYSICS LETTERS, vol. 45, no. 8, octobre 1984, pages 823-825, American Institute of Physics, New York, US; M. NAKAZAWA et al.: "Efficient multiple visible light generation in a polarization-preserving optical fiber pumped by a 1.064-mum yttrium aluminum garnet laser"

ACTORUM AG

## Description

La présente invention concerne une source optique monomode et un dispositif amplificateur continuement accordable dans le proche infra-rouge.

Dans beaucoup d'applications: spectroscopie, caractérisation de composants optiques, etc. il est nécessaire de disposer d'une source optique de forte brillance à longueurs d'onde variables.

Pour réaliser de telles sources, l'une des techniques utilisées habituellement est celle de l'oscillateur paramétrique non linéaire qui utilise une onde de pompe issue d'un laser et l'effet non-linéaire d'ordre deux dans un cristal correspondant, par exemple le niobate de lithium: $LiNbO_3$. Ce type de source pose de nombreux problèmes tels que ceux de la qualité du faisceau et la répétabilité des résultats.

Une autre possibilité est celle mettant en œuvre des lasers à centres colorés. Ce type de source présente l'inconvénient de nécessiter la régénération fréquente des cristaux utilisés comme milieu actif.

Enfin, récemment, des sources multilongueurs d'ondes ont été réalisées en exploitant l'effet Raman stimulé dans les fibres optiques comme cela est décrit dans les documents suivants:
- Optical Fiber Telecommunications publié par Academic Press: «Nonlinear Properties of Optical Fibers» de R.H. Stolen, pages 126 à 150;
- Optics Communications, Volume 39, n° 3 du 1er octobre 1981: «Stimulated Raman Amplification Characteristics In Long Span Single-Mode Silica Fibers» de M. Ikeda, pages 148 à 152. Cependant, avec ce type de source, on ne peut obtenir qu'un nombre déterminé de longueurs d'ondes possibles, longueurs d'ondes fixées une fois pour toutes par le processus de diffusion Raman caractéristique des modes vibrationnels du matériau utilisé pour réaliser la fibre optique.

Une des applications les plus importantes des fibres optiques est la transmission optique de données, de types numériques ou analogiques. Dans ce cadre d'application, les fibres optiques constituent le canal de liaison entre des organes émetteurs ou sources, et des organes récepteurs.

Il est particulièrement important, notamment pour des liaisons optiques à grande distance, de minimiser au maximum les pertes de transmission. L'origine des pertes est diverse: nature de la fibre optique utilisée, connexion, etc. Pour les liaisons à larges bandes et/ou à longues distances, on utilise des fibres optiques monomodes. La longueur d'onde utilisée doit également être prise en compte. L'atténuation la plus faible se produit pour des longueurs d'ondes centrées autour de 1,5 micromètre, c'est-à-dire dans la gamme de l'infra-rouge proche.

Il est donc intéressant d'utiliser des sources de radiations émettant à une longueur d'onde proche de cette valeur.

L'invention se fixe pour but de répondre à ce besoin, tout en palliant les inconvénients de l'art connu.

L'objet de l'invention est donc une source optique monomode accordable du type mettant en œuvre un effet non linéaire à quatre photons par interaction résultant d'un fort confinement d'une onde, dite de pompe, d'une première longueur d'onde, injectée dans une fibre optique unimodale de longueur déterminée située dans un spectre des longueurs d'ondes du proche infra-rouge; comprenant un générateur de ladite onde de pompe, des moyens optiques de couplage de l'onde générée avec une face d'entrée de la fibre optique; caractérisée en ce que:
- la première longueur d'onde (onde de pompe) est située au voisinage de la longueur d'onde de dispersion chromatique nulle du matériau de la fibre optique;
- la longueur d'onde de coupure ($\lambda c$) de la fibre est positionnée par rapport à la longueur d'onde de dispersion nulle telle que le désaccord de phase lié aux propriétés de dispersion de mode inhérentes à la structure du guide soit nul pour des longueurs d'ondes discrètes;
- elle comprend une enceinte thermostatée dans laquelle est disposé au moins un tronçon de la dite fibre optique de longueur déterminée et des moyens de commande à variation continue de la température de cette enceinte de manière à rendre la source continuement accordable dans ledit spectre des longueurs d'ondes de l'infra-rouge.

L'invention a encore pour objet un dispositif amplificateur optique accordable du type mettant en œuvre un effet non linéaire à quatre photons par interaction résultant d'un fort confinement d'une onde, dite de pompe, d'une première longueur d'onde, injectée dans une fibre optique unimodale de longueur déterminée, et couplage avec une onde dite de signal, d'une seconde longueur d'onde, longueurs d'ondes situées dans un spectre des longueurs d'ondes du proche infrarouge; comprenant un générateur de ladite onde de pompe, un générateur de ladite onde signal et des moyens optiques de couplage desdites ondes; caractérisée en ce que
- la première longueur d'onde (onde de pompe) est située au voisinage de la longueur d'onde de dispersion chromatique nulle du matériau de la fibre optique;
- la longueur d'onde de coupure ($\lambda c$) de la fibre est positionnée par rapport à la longueur d'onde de dispersion nulle telle que le désaccord de phase lié aux propriétés de dispersion de mode inhérentes à la structure du guide soit nul pour des longueurs d'ondes discrètes;
- il comprend une enceinte thermostatée dans laquelle est disposé au moins un tronçon de ladite fibre optique de longueur déterminée et des moyens de commande à variation continue de la température de cette enceinte de manière à rendre le dispositif continuement accordable dans ledit spectre des longueurs d'ondes de l'infra-rouge.

L'invention sera mieux comprise et d'autres avantages apparaîtront à l'aide de la description qui suit en référence aux figures annexées et parmi lesquelles:

- les figures 1 et 2 sont des diagrammes illustrant les conditions d'accord de phase en fonction de la température pour un premier type de fibres optiques unimodales.
- la fig. 3 illustre le profil d'indice de réfraction optique pour un second type de fibres optiques unimodales, tu type à gaine entrée;
- la fig. 4 est un diagramme illustrant des conditions d'accord de phase en fonction de la température pour ce type de fibre optique;
- la figure 5 illustre schématiquement une source optique monomode accordable selon l'invention;
- la figure 6 est un dispositif amplificateur optique continuement accordable selon l'invention;
- la figure 7 est un diagramme illustrant le spectre de longueurs d'ondes obtenu avec une source accordable selon l'invention pour différentes températures;
- les figures 8 à 10 illustrent plusieurs variantes de réalisations de dispositifs selon l'invention;
- la figure 11 illustre l'application d'un dispositif selon l'invention dans un dispositif d'amplification sélectif de fréquence;
- la figure 12 illustre l'application d'un dispositif selon l'invention dans un dispositif d'amplification et de régénération de signaux transmis par un canal à fibre optique.

La fibre optique est du type fibre de transmission monomode de type standard, c'est-à-dire non biréfringente.

La source optique monomode selon l'invention fait appel à une interaction non-linéaire résultant d'un fort confinement d'une onde de pompe très puissante se progageant dans une fibre optique unimodale. Plus précisément, il est fait appel à un effet non-linéaire à quatre photons.

Il est utile tout d'abord de rappeler les phénomènes physiques mis en œuvre.

L'interaction non linéaire résultant d'un fort confinement d'une onde de pompe se propageant dans une fibre optique unimodale de grande longueur, permet de générer des ondes de fréquences $\upsilon_S$ et $\upsilon_{AS}$; $\upsilon_S$ étant connue sous la dénomination d'onde Stokes ou signal, $\upsilon_{AS}$ sous la dénomination d'onde anti-Stokes ou Idler.

Ce processus paramétrique de mélange à quatre photons, ne peut être entretenu que si les conditions de conservation d'énergie et d'accord de phase sont simultanément réalisées. Ce qui se réduit aux relations:

$$2\omega_p - \omega_S - \omega_{AS} = 0 \qquad (1)$$

relation dans laquelle AS, S et P sont les indices associés à «anti-Stokes», «Stokes» et «pompe».

$$\Delta K = K_{AS} + K_S - 2Kp = 0 \qquad (2)$$
$$\text{où } \Delta K = \Delta K_M + \Delta K_W \qquad (3)$$

relations dans lesquelles $\Delta K_M$ caractérise le désaccord de phase lié aux propriétés dispersives du matériau de base constituant la fibre et $\Delta K_W$ est relié aux propriétés de dispersion de mode liées à la structure du guide. Dans les fibres optiques unimodales, ce paramètre est lié au profil d'indice, à la position de la longueur d'onde de coupure $\lambda_c$ par rapport à la longueur d'onde de pompe et à la différence d'indice entre les matériaux de cœur et de gaine.

Les expressions $\Delta K_M$ et $\Delta K_W$ peuvent être reliées aux caractéristiques optogéométriques de la fibre via les relations suivantes:

$$\Delta K_M = \frac{1}{C}(n_{AS}\,\omega_{AS} + n_S\,\omega_S - 2n_p\,\omega_p) \qquad (4)$$

$$\Delta K_W = \frac{\Delta n}{C}(B_{AS}\,\omega_{AS} + B_S\,\omega_S - 2B_p\,\omega_p) \qquad (5)$$

où:

$$B_i = \frac{(\beta_i^2\,C^2 / \omega_i^2) - n_2^2(\omega_i)}{n_1^2(\omega_i) - n_2^2(\omega_i)} \qquad (6)$$

relations dans lesquelles $n_i$ représente les valeurs absolues des indices optiques aux longueurs d'ondes $\lambda_i$; $\beta_i$ les vecteurs d'ondes longitudinaux; $\beta_i$ les valeurs de la constante de propagation normalisées des modes pour chaque longueur d'onde $\lambda_p$, $\lambda_S$, $\lambda_{AS}$; $\omega_i$ est la fréquence angulaire caractéristique de chaque longueur d'onde

$$k_i = \frac{\omega i}{C} = \frac{2\pi}{\lambda_i}; k_i$$

étant le vecteur d'onde associé et C la vitesse de la lumière.

Pour la silice faiblement dopée, la condition $\Delta K_M = 0$ peut être réalisée en utilisant une longueur d'onde de pompe située au voisinage de la longueur d'onde de dispersion chromatique nulle. Cette longueur d'onde est comprise entre 1.273 micromètres (silice pure) et 1,31 micromètres (silice dopée à l'oxyde de germanium).

En positionnant la longueur d'onde de coupure $\lambda_c$ par rapport à cette longueur d'onde caractéristique du matériau, on peut réaliser la condition $\Delta K_W = 0$ pour des longueurs d'ondes discrètes devant satisfaire la condition (1).

Les paramètres $B_i$ sont reliés aux caractéristiques optogéométriques de la fibre par la relation:

$$B_i = 1 - \frac{U_i^2}{V_i^2} \qquad (7)$$

relation dans laquelle $V_i$ sont les fréquences normalisées des modes et sont reliées au rayon de cœur de la fibre optique aux différences d'indice et aux longueurs d'ondes des ondes électromagnétiques par la relation:

$$V_i = \frac{2\pi a}{\lambda_i}\sqrt{n_1^2(\omega_i) - n_2^2(\omega_i)} \qquad (8)$$

relation dans laquelle $u_i$ représentent les composantes transverses des vecteurs d'ondes longitudinaux $\beta_i$, dans le cœur de la fibre et satisfont à l'équation aux valeurs propres:

$$u \frac{J_1(u)}{J_o(u)} - (V^2 - u^2)^{1/2} \frac{K_1(V^2 - u^2)^{1/2}}{K_o(V^2 - u^2)^{1/2}} = 0 \qquad (9)$$

relation dans laquelle $J_1$, $J_o$, $K_1$, $K_o$ sont les fonctions de Bessel et Bessel modifiées d'ordre 1 et 0.

On sait qu'une modification de la température des matériaux constituant le guide d'onde se traduit par une variation des bandes d'absorption dans la partie U.V. du spectre. Ces bandes d'absorption suivent la loi empirique d'Urbach.

Dans le domaine infra-rouge, de telles variations peuvent également être observées, correspondant à une modification du processus d'absorption multiphonons.

Or de telles variations des bandes d'absorptions se traduisent par une variation des propriétés de dispersion des indices optiques.

D'autre part, une modification des paramètres géométriques ou des indices optiques, se traduit par une variation des paramètres $B_i$. Ce sont ces deux effets combinés qui modifient les conditions d'accord de phase.

L'invention tire parti de ce phénomène physique de la manière qui sera indiquée dans ce qui suit.

On va tout d'abord considérer les effets des variations de la température sur l'indice optique.

L'indice optique d'un milieu de composition binaire peut s'écrire:

$$n^2{}_1(\lambda_1 T) = 1 + G_1(\lambda_1 T)g1 + G_2(\lambda_1 T)g_2 \qquad (10)$$

relation dans laquelle:

$$g_1 + g_2 = 1 \qquad (11)$$

et $G_2(\lambda, T)$ et $G_1(\lambda, T)$, sont les facteurs de dispersion chromatique du matériau de base et de celui-ci en présence d'un agent de dopage. $g_2$ et $g_1$ représentent les concentrations molaires du matériau de base et du dopant et son compris entre 0 et 1.

Une variation de température peut donc affecter les valeurs des indices des matériaux, ce qui peut s'écrire:

$$n_1 (\lambda, T) = n_1 (\lambda, T_o) + (T - T_o)\frac{dn_1}{dT} \qquad (12)$$

où:

$$\frac{dn_1}{dT} = \frac{1}{2n_1}\left( g_1 \frac{dG_1}{dT} + (1 - g_1)\frac{dG_2}{dT}\right) \qquad (13)$$

L'effet de la température sur la silice étant naturellement obtenu à partir de l'expression:

$$\frac{dn_2}{dT} = \frac{1}{2n_2}\frac{dG_2}{dT} \qquad (14)$$

Une variation de la température a également pour conséquence de modifier les paramètres optogéométriques de la fibre ce qui va se traduire par une modification des valeurs des constantes de propagations normalisées. En reprenant les notations précédentes, la relation suivante décrit cette variation:

$$B(T, V) = B(T_o, V) + \frac{dB}{dT}\Delta T \qquad (15)$$

relation dans laquelle:

$$\frac{dB}{dT} = \left(\frac{d(VB)}{dV} - B\right)\left[\frac{1}{a}\frac{da}{dT} + \frac{1}{(n_1^2 - n_2^2)}\left(n_1 \frac{dn_1}{dT} - n_2 \frac{dn_2}{dT}\right)\right] \qquad (16)$$

Cette relation peut se simplifier par les approximations suivantes:

$$\frac{dn_1}{dT} \simeq \frac{dn_2}{dT} \text{ et } n_1 \simeq n_2, \text{ d'où:}$$

$$\frac{dB}{dT} = \left(\frac{d(VB)}{dV} - B\right)\left(\frac{1}{a}\frac{da}{dT} + \frac{1}{2n_1}\frac{dn_1}{dT}\right) \qquad (17)$$

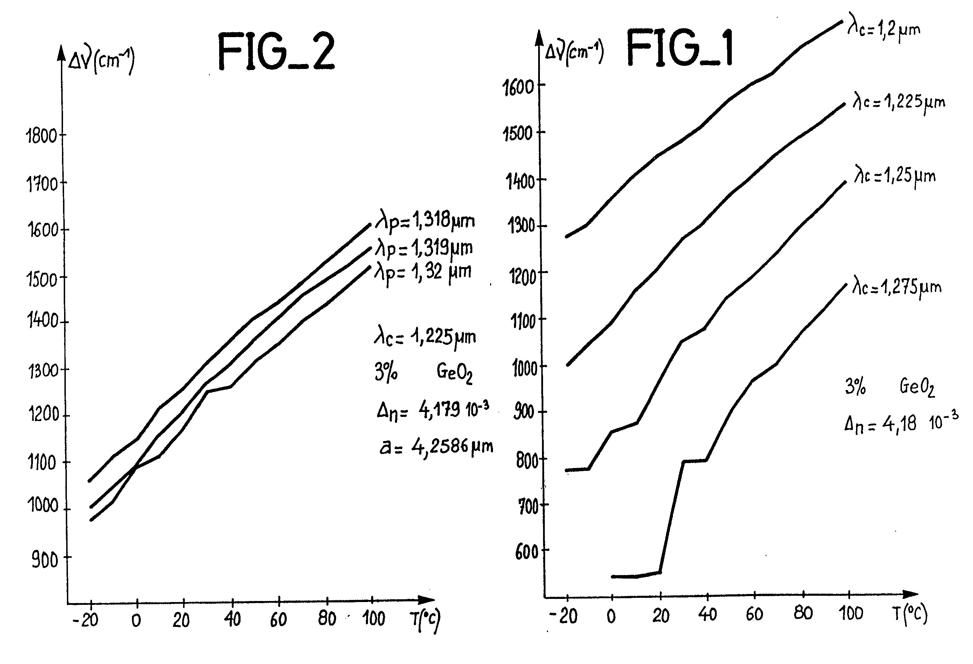

Pour fixer les idées, des valeurs numériques ont été portées sur les diagrammes des figures 1 et 2 mettant en évidence l'influence des variations de température sur la variation de la fréquence $\Delta\upsilon$. La figure 1 représente les conditions d'accord de phase en fonction de la température et des paramètres optogéométriques associés à une fibre optique monomode: la longueur d'onde de coupure $\lambda_c$, le diamètre du cœur a, et la variation de l'indice optique $\Delta n$ entre le cœur et la gaine optique, la fibre étant du type à saut d'indice.

Plus précisément, l'axe des ordonnées représente les variations de fréquence $\Delta\upsilon$ en cm$^{-1}$ en fonction de la température avec comme paramètre la longueur d'onde de coupure $\lambda c$.

Sur la figure 1, sont représentées quatre courbes correspondant à des longueurs d'onde de coupure égales à 1,2 micromètre; 1,225 micromètre; 1,25 micromètre; et 1,275 micromètre. Les autres paramètres sont fixés. La concentration molaire en dopants, c'est-à-dire en dioxyde de germanium, était de 3%, le saut d'indice $\Delta n$ est de $4,18 \ 10^{-3}$ et la longueur d'onde de pompe était $\lambda_p = 1,319$ micromètre.

On constate que pour ces valeurs, une variation de température comprise entre $-20$ et $+100\,°C$ permet de réaliser un accord de la source dans une gamme s'étendant sur 500 cm$^{-1}$.

On pourrait également construire des courbes présentant la variation de la fréquence en cm$^{-1}$ en fonction de la température avec comme paramètre la variation d'indice optique. Les calculs montrent que le pente

$$\frac{\Delta\upsilon}{\Delta T}$$

est d'autant plus élevée que la différence d'indice est faible et que la longueur d'onde de coupure est proche de la longueur d'onde de pompe.

La figure 2 permet de mettre en évidence la variation de la fréquence en fonction de la température avec comme paramètre la longueur d'onde de pompe. Sur cette figure, il est représenté trois pompes correspondant à trois longueurs d'onde de pompe égale respectivement à 1,318 micromètre; 1,319 micromètre; et 1,32 micromètre. La longueur d'onde de coupure était fixée à 1,225 micromètre, le pourcentage moléculaire en dioxyde de germanium à 3%, le saut d'indice $\Delta n$ égal à $4,179 \cdot 10^{-3}$ et le corps de la fibre optique avait un diamètre a égal à 4,2586 micromètre.

Des fibres présentant des structures plus complexes que celles à profil en échelon et à double indices peuvent également être utilisées. Il s'agit par exemple de fibres optiques unimodales à gaine enterrée. Ces fibres sont situées, de par leur propriété, entre les fibres de type double indice et celles à profil en «w». La gaine est généralement réalisée en insérant du fluor avec la silice durant l'opération de dépôt, ce qui a pour effet d'abaisser l'indice du matériau de base. Pour ces fibres, il y a trois paramètres qui gouvernent l'établissement du régime de propagation monomode, à savoir: les différences d'indices cœur – gaine et gaine optique – tube support, et la largeur de la gaine rapportée au rayon de cœur.

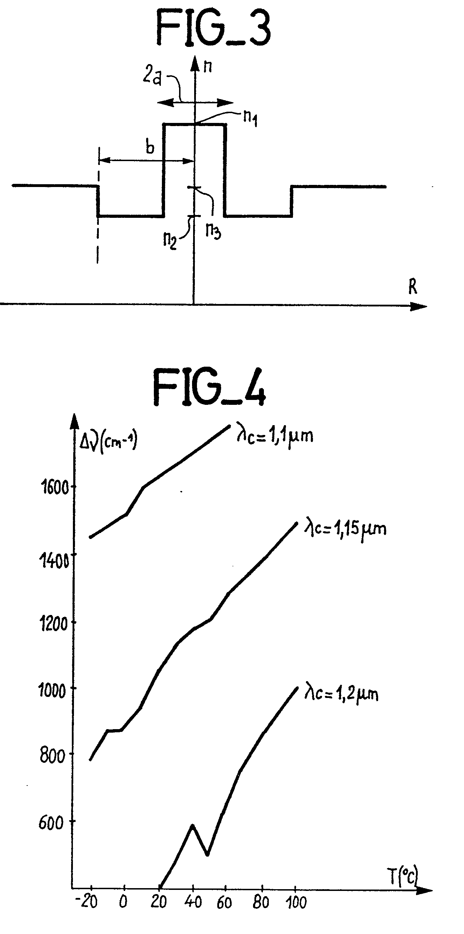

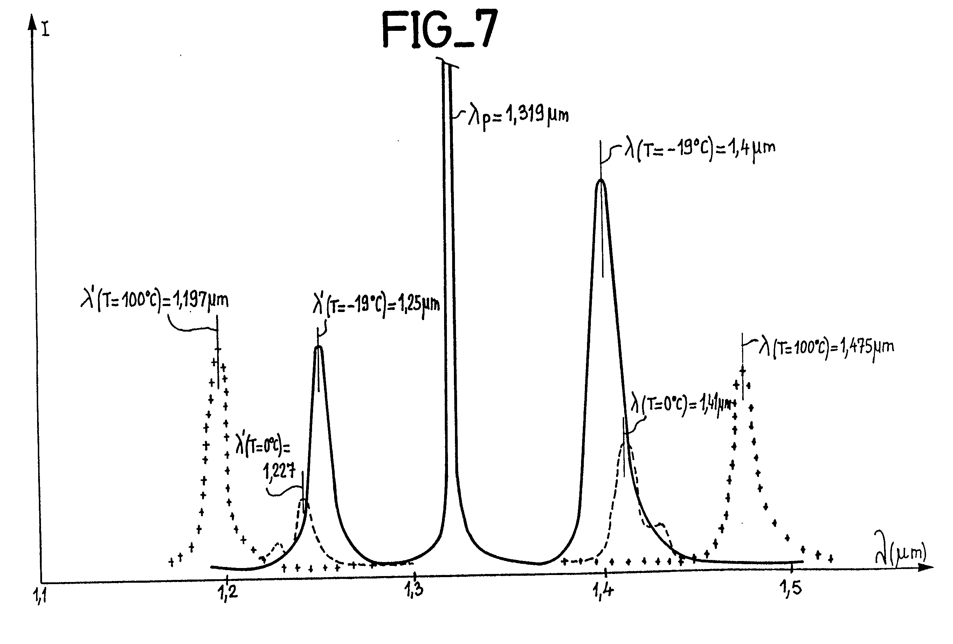

La figure 3 représente schématiquement les variations du profil d'indice n en fonction de l'éloignement R de l'axe de révolution de la fibre optique. Cette fibre est caractérisée par trois indices différents $n_1$, indice de cœur, $n_2$, indice de gaine optique, et $n_3$ indice du tube support. Le diamètre du cœur est égal à 2a et le diamètre extérieur de la gaine optique égal à 2b.

La figure 4 illustre les variations de la fréquence $\Delta v$ en $cm^{-1}$ en fonction de la température T en °C avec pour paramètre la longueur d'onde de coupure $\lambda c$. Sur cette figure 4 sont représentées trois courbes correspondant à $\lambda c = 1,1$ micromètre; 1,15 micromètre et 1,2 micromètre. La différence d'indice optique $\Delta n_1 = n_1 - n_2$ était égal à $7,07 \cdot 10^{-3}$; la différence d'indice $\Delta n_2 = n_3 - n_2$ était égal à $1,78 \cdot 10^{-3}$; le rapport entre les rayons b et a était égal à 5; et la longueur d'onde de pompe était égale à 1,319 micromètre.

L'invention tire partie des phénomènes physiques qui viennent d'être rappelés.

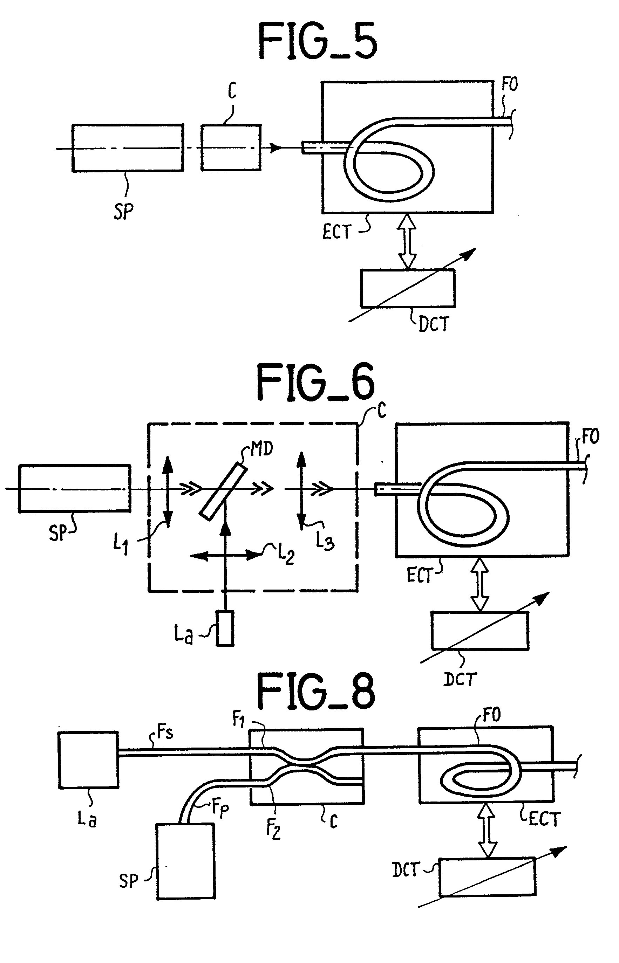

La figure 5 illustre schématiquement une source optique monomode continuement accordable dans le proche infra-rouge selon l'invention.

Elle comprend une source de puissance SP destinée à générer l'onde de pompe. L'onde générée par cette source est, à l'aide de moyens de couplage optique C, injectée dans une fibre optique FO, de longueur déterminée, dans laquelle se produit l'interaction non linéaire précédemment décrite.

La figure 6 illustre schématiquement un dispositif amplificateur optique continuement accordable dans le proche infra-rouge selon l'invention.

Il comprend une source de puissance SP destinée à générer l'onde de pompe comme dans le cas de la source représentée sur la figure 5, et une source La ou source d'onde signal. Les ondes générées par ces deux sources sont, à l'aide de moyens de couplage optique C, injectées toutes deux dans une fibre optique FO, de longueur déterminée, dans laquelle se produit l'interaction non linéaire précédemment décrite.

Les moyens de couplage C comprennent, dans l'exemple illustré, deux lentilles $L_1$ et $L_2$ associées respectivement aux sources de pompe SP et de signal La. Ces lentilles couplent les sources à un miroir dichroïque MD dont le coefficient de réflexion est maximum pour une longueur d'onde centrée par exemple sur 1,5 micromètre, longueur d'onde émise par la source signal La. Il est prévu une troisième lentille $L_3$ couplant optiquement les deux faisceaux issus des sources La et SP à la face d'entrée de la fibre optique FO.

Dans un exemple de réalisation, la source de pompe SP est constituée par un laser Yag émettant des radiations centrées sur la longueur d'onde 1,319 micromètres et la source signal La est constituée par une diode laser semiconductrice. Les lentilles $L_1$ à $L_3$ doivent être constituées par un matériau transparent dans la gamme des longueurs d'onde émises par les sources, par exemple en silice. Une longueur typique d'interaction de la fibre optique FO est d'environ 30 mètres. Le laser Yag émet avec une puissance crête typiquement dans la gamme 60 à 100 watts.

Selon la caractéristique essentielle de l'invention, la fibre optique FO est disposée dans une enceinte thermique ECT, susceptible d'être régulée en température à l'aide d'un dispositif de commande DCT.

En accord avec ce qui vient d'être décrit, cette disposition, essentielle selon l'invention, permet en fixant la température de l'enceinte ECT, c'est-à-dire également de la partie de fibre FO comprise dans l'enceinte, de modifier à volonté, de façon continuement variable et dans une large gamme, les nouvelles fréquences générées dans le cas de la source décrite en relation avec la figure 5 ou d'accorder le dispositif amplificateur décrit en relation avec la figure 6 sur une interaction déterminée.

Typiquement l'enceinte thermique, devra permettre des variations de température comprise dans la gamme –20°C à +100°C.

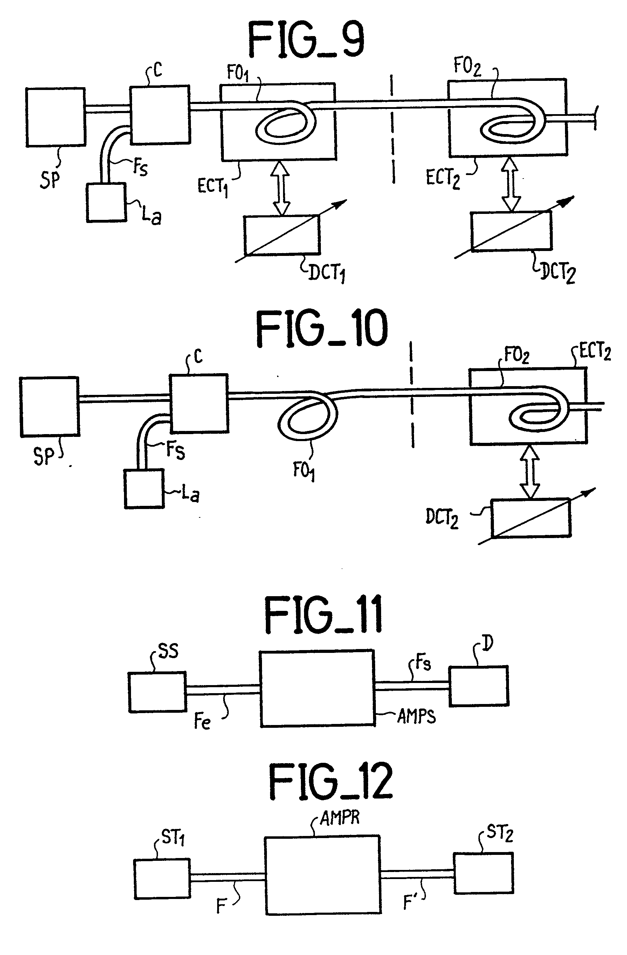

Le diagramme de la figure 7 est un diagramme des longueurs d'onde obtenues pour trois températures T différentes: –19°C, 0°C, et 100°C dans le cas de la source accordable de la figure 5. Plus précisément, l'axe vertical représente l'intensité optique en unités relatives arbitraires et l'axe horizontal la longueur d'onde en micromètres.

Sur le diagramme de la figure 7, outre la raie de radiations de grande puissance émises par la source de pompe SP, de longueur d'onde $\lambda_p = 1,319$ micromètres, on trouve, de part et d'autre de cette raie, pour T = –19°C, des raies centrées sur des longueurs d'onde $\lambda = 1,4$ micromètre et $\lambda' = 1,25$ micromètre; pour T = 0°C, des raies centrées sur les longueurs d'onde $\lambda = 1,41$ micromètre et $\lambda' = 1,227$ micromètre; et pour $T = 100°C$, des raies centrées sur les longueurs d'onde $\lambda = 1,475$ micromètre et $\lambda' = 1, 197$ micromètre.

Dues à une distribution longitudinale de l'accord de phase ces raies représentent naturellement un spectre beaucoup moins étroit que celui présenté par la raie émise par la source de pompe.

Il est naturellement possible de remplacer les moyens de couplage, les lentilles $L_1$ à $L_3$ ainsi que le miroir dichroïque MD représentés sur la figure 5, par des moyens plus compacts, par exemple par un coupleur à fibres optiques.

Une telle réalisation est représentée sur la figure 8. Le coupleur C comprend deux tronçons de fibres optiques $F_1$ et $F_2$. Dans une région commune, ces deux tronçons ont été dénudés et on a réalisé dans cette région dénudée un polissage, de manière à former un dioptre plan. Les dioptres plans des deux tronçons de fibres optique $F_1$ et $F_2$ sont accolés.

La source signal La est couplée optiquement à l'une des branches du coupleur, le tronçon de fibres $F_1$ sur la figure 8, par une fibre amorce $F_S$, et la source pompe SP couplée à l'autre branche, le tronçon $F_2$, à l'aide d'une seconde fibre amorce $F_p$.

La fibre FO est couplée à la seconde extrémité du tronçon de fibre optique $F_1$. Comme précédemment, cette fibre optique FO est disposée dans une enceinte thermostatée ECT, commandée en température par le dispositif de commande DCT.

Pour obtenir un effet de non-linéarité marqué, la puissance émise par la source de pompe doit être d'autant plus importante que la longueur d'interaction, c'est-à-dire la longueur de la fibre optique FO est plus faible. On peut naturellement augmenter cette longueur de fibre optique. Cependant, cette augmentation est limitée par divers phénomènes parasites, qui conduisent, notamment comme il a été indiqué lors de la description du diagramme de la figure 7, à un élargissement des spectres de raies. Dans la pratique, la longueur d'interaction est limitée à quelques dizaines de mètres, typiquement à une longueur de l'ordre de 30 mètres. Dans ces conditions, comme il a été indiqué, la puissance crête émise par la source de pompe doit être comprise dans la gamme 60 à 100 watts.

Selon des variantes supplémentaires de l'invention, il est cependant possible d'augmenter cette longueur d'interaction, sans détériorer le signal utile émis.

Sur la figure 9 est représentée une première variante de réalisation permettant d'augmenter la longueur d'interaction. Pour ce faire, la fibre optique dans laquelle l'interaction non-linéaire a lieu, est divisée en deux tronçons $FO_1$ et $FO_2$ placés chacun dans des enceintes thermostatées distinctes, $ECT_1$ et $ECT_2$. Chaque enceinte est commandée en température séparément à l'aide d'un dispositif qui lui est associé, respectivement $DCT_1$ et $DCT_2$. Dans la réalité, il n'y a pas deux fibres distinctes disposées en cascade, mais une fibre d'un seul tenant. L'important est de pouvoir porter chaque tronçon de fibre à une température distincte. Par ce biais, il est possible d'augmenter la longueur d'interaction tout en compensant les inhomogénéités des paramètres opto-géométriques de la fibre optique dans laquelle l'interaction non-linéaire a lieu. La puissance de la source de pompe nécessaire est alors divisée par deux, si les deux tronçons $FO_1$ et $FO_2$ sont d'égales longueurs en double ainsi la longueur d'interaction. Naturellement le nombre de tronçons n'est pas limité à deux. Cependant, pour un nombre plus important, il devient difficile d'ajuster correctement les différentes températures des enceintes. Deux à trois tronçons constituent un nombre réaliste.

Certaines diodes laser, par exemple des diodes laser à réseau distribué, présentent la propriété avantageuse d'émettre sur une fréquence très précise, fréquence finement contrôlable au moment de la fabrication. Ces diodes sont de type dit «DFB».

L'invention s'applique également de façon avantageuse dans ce cas. Pour ce faire, on conserve l'architecture qui vient d'être décrite en relation avec la figure 9, notamment on divise la fibre optique dans laquelle l'interaction non linéaire est réalisée en deux tronçons. A la différence du dispositif décrit sur cette figure, un seul des tronçons, par exemple le tronçon $FO_2$, est disposé à l'intérieur d'une enceinte thermostatée $ECT_2$. Les autres éléments sont identiques à ceux de la figure 9 et ne seront plus décrits.

Selon cette seconde variante, décrite en relation avec la figure 10, on augmente également la longueur d'interaction mais l'enceinte thermostatée a pour but, dans ce cas, d'accorder le second tronçon sur les conditions naturelles de la première fibre, conditions qui dépendent des différents paramètres opto-géométriques qui ont été précédemment rappelés.

Les dispositifs conformes à l'invention, sont susceptibles de différents types d'application dans le domaine de télécommunications par voie optique.

Une première catégorie d'applications est naturellement l'utilisation du dispositif tel quel en tant que source ou dispositif amplificateur optique accordables sur une longueur d'onde déterminée. Il est inutile de revenir sur ces applications qui découlent directement de ce qui a été décrit en relation notamment avec les figures 5 à 10.

Une deuxième catégorie d'applications est l'utilisation d'un dispositif selon l'invention comme amplificateur sélectif. En effet, pour une température déterminée T, le processus d'interaction nonlinéaire ne peut être entretenu que si les conditions de conservation d'énergie et d'accord de phase telles qu'elles ressortent des relations (1) et (2) sont réalisées. La fréquence du signal de pompe étant fixée, ceci impose une fréquence signal précise.

La figure 11 illustre schématiquement un dispositif d'amplification sélectif utilisant un dispositif selon l'invention. L'amplificateur sélectif porte la référence générale AMPS et comprend notamment le générateur d'onde de pompe. Cet amplificateur reçoit un signal émis par une source optique SS couplée optiquement, par exemple à l'aide d'une fibre optique d'entrée $F_e$, à l'amplificateur sélectif AMPS. Cet amplificateur peut être réalisé conformément à l'une des configurations représentées par les figures 5 à 10. A titre d'exemple, si l'on se place dans le cadre de la configuration représentée par la figure 9, la fibre optique $F_s$ est couplée optiquement à la face de sortie de la branche $FO_2$ et à un détecteur D.

Ce type d'amplificateur sélectif, mettant en œuvre un dispositif amplificateur continuement accordable selon l'invention, présente en outre la caractéristique avantageuse d'être très rapide. Le temps de réponse est typiquement de l'ordre de la picoseconde.

Une troisième catégorie d'applications envisageable d'un dispositif selon l'invention est son utilisation en tant qu'amplificateur régénérateur inséré dans un canal de liaison par fibre optique.

La figure 12 représente schématiquement un dispositif de ce type.

Une liaison par fibre optique est établie entre une station émettrice, $ST_1$, et une station réceptrice $ST_2$. Un dispositif d'amplification et de régénération AMPR est inséré le long de la liaison, c'est-à-dire, dans l'exemple illustré, entre deux tronçons de fibres F et F'.

Cet amplificateur regénérateur AMPR est également constitué, pour cette application, par un dispositif amplificateur continuement accordable selon l'invention.

Le dispositif amplificateur comprend tous les éléments décrits précédemment en relation avec l'une quelconque des figures 9 à 10, notamment une source de pompe et au moins un tronçon de fibre optique dans lequel a lieu l'interaction non linéaire, tronçon disposé dans une enceinte thermostatée commandée par un dispositif de contrôle de température.

Plus précisément, si l'on se place dans le cadre de la configuration représentée sur la figure 9, la fibre optique F de la figure 12 joue le rôle de la fibre optique $F_s$ de la figure 9. La source signal La sur la figure 9 est, dans le cadre de l'application représentée sur la figure 12, disposée dans la station émettrice $ST_1$. La fibre optique F' (figure 12) est couplée optiquement à la sortie, branche $F_2$, du coupleur C de la figure 9.

## Revendications

1. Source optique monomode accordable du type mettant en œuvre un effet non linéaire à quatre photons par interaction résultant d'un fort confinement d'une onde, dite de pompe, d'une première longueur d'onde, injectée dans une fibre optique unimodale (FO) de longueur déterminée située dans un spectre des longueurs d'ondes du proche infra-rouge; comprenant un générateur (SP) de ladite onde de pompe, des moyens optiques de couplage (C) de l'onde générée avec une face d'entrée de la fibre optique; caractérisée en ce que:

- la première longueur d'onde (onde de pompe) est située au voisinage de la longueur d'onde de dispersion chromatique nulle du matériau de la fibre optique;
- la longueur d'onde de coupure ($\lambda c$) de la fibre (FO) est positionnée par rapport à la longueur d'onde de dispersion nulle telle que le désaccord de phase lié aux propriétés de dispersion de mode inhérentes à la structure du guide soit nul pour des longueurs d'ondes discrètes;
- elle comprend une enceinte thermostatée dans laquelle est disposé au moins un tronçon de ladite fibre optique de longueur déterminée et des moyens de commande à variation continue de la température de cette enceinte de manière à rendre la source continuement accordable dans ledit spectre des longueurs d'ondes de l'infra-rouge.

2. Dispositif amplificateur optique accordable du type mettant en œuvre un effet non linéaire à quatre photons par interaction résultant d'un fort confinement d'une onde, dite de pompe, d'une première longueur d'onde, injectée dans une fibre optique unimodale (FO) de longueur déterminée, et couplage avec une onde dite de signal, d'une seconde longueur d'onde, longueurs d'ondes situées dans un spectre des longueurs d'ondes du proche infra-rouge; comprenant un générateur (SP) de ladite onde de pompe, un générateur (La) de ladite onde signal et des moyens optiques de couplage (C) desdites ondes; caractérisée en ce que:

- la première longueur d'onde (onde de pompe) est située au voisinage de la longueur d'onde de dispersion chromatique nulle du matériau de la fibre optique;
- la longueur d'onde de coupure ($\lambda c$) de la fibre (FO) est positionnée par rapport à la longueur d'onde de dispersion nulle telle que le désaccord de phase lié aux propriétés de dispersion de mode inhérentes à la structure du guide soit nul pour des longueurs d'ondes discrètes;
- il comprend une enceinte thermostatée dans laquelle est disposé au moins un tronçon de ladite fibre optique de longueur déterminée et des moyens de commande à variation continue de la température de cette enceinte de manière à rendre le dispositif continuement accordable dans ledit spectre des longueurs d'onde de l'infra-rouge.

3. Dispositif selon la revendication 2, caractérisé en ce que le coupleur (C) est un coupleur à deux fibres optiques ($F_1$, $F_2$ recevant respectivement l'onde de source et l'onde de pompe.

4. Dispositif selon l'une quelconque des revendications 2 à 3, caractérisée en ce que le générateur d'onde de pompe (SP) est un laser YAG émettant sur une longueur d'onde centrée sur 1,319 micromètre.

5. Dispositif selon l'une quelconque des revendications 2 à 3, caractérisée en ce que le générateur d'onde signal (La) est une diode laser.

6. Dispositif selon l'une quelconque des revendications 2 à 5, caractérisée en ce que ladite fibre optique de longueur déterminée est divisée en tronçons (FO$_1$, FO$_2$) et en ce qu'elle comprend une enceinte thermostatée (ECT$_1$, ECT$_2$) associée à des moyens de commande de température (DCT$_1$, DCT$_2$) distincts pour chaque tronçon.

7. Dispositif selon l'une quelconque des revendications 2 à 5, caractérisée en ce que, le générateur d'onde signal (La) émettant des radiations de longueurs d'ondes contrôlables, ladite fibre de longueur déterminée comprend un premier tronçon (FO$_1$) et un second tronçon (FO$_2$) et en ce que seul (FO$_2$) l'un des tronçons est disposé dans une enceinte thermostatée (ECT) de manière à accorder ce tronçon sur les paramètres opto-géométriques naturels de l'autre tronçon (FO$_1$).

8. Dispositif selon l'une quelconque des revendications 2 à 7, caractérisée en ce que les moyens de commande de température (DCT$_1$, DCT$_2$) de chaque enceinte thermostatée (ECT$_1$, ECT$_2$) imposent de façon continuement variable une température comprise dans la gamme s'étendant de 20°C à +100°C.

9. Dispositif d'amplification sélectif (AMPS) d'une onde signal de longueur d'onde déterminée, caractérisée en ce qu'il comprend un dispositif selon l'une quelconque des revendications 2 à 8.

10. Dispositif d'amplification et de regénération (AMPR) d'une onde signal véhiculée par un canal de transmission d'informations à fibres optiques (F, F'), caractérisé en ce qu'il comprend un dispositif selon l'une quelconque des revendications 2 à 8.

**Claims**

1. A tunable monomode light source based on a non-linear four-photons effect and on the interaction resulting from a strong confinement of a pump wave having a first wavelength, injected into a single mode optical fibre of a given length located in a near infrared wavelength spectrum, the light source comprising a generator (SP) for producing said pump wave, optical coupling means (C) for coupling this produced wave to an input face of the optical fibre, characterized in that
– the first wavelength (of the pump wave) is situated in the vicinity of the wavelength of zero chromatic dispersion of the optical fibre material,
– the cut-off wavelength ($\lambda$c) of the fibre (FO) is selected with respect to the zero dispersion wavelength in such a way that the phase mismatching associated to the mode dispersion properties of the guide structure is zero for discrete wavelengths,
– the source comprises a thermostat container in which at least one length portion of said optical fibre of a predetermined length is disposed, and control means allowing to continuously modify the temperature of this container in such a way that the source becomes continuously tunable in said infrared wavelength spectrum.

2. A tunable optical amplification device based on a non-linear four-photons effect and on the interaction resulting from a strong confinement of a pump wave having a first wavelength, injected into a single mode optical fibre (FO) of a given length, and on the coupling with a signal wave having a second wavelength, said wavelength being located in the near infrared wavelength spectrum, the device comprising a generator (SP) for producing said pump wave, a generator (La) for producing said signal wave and optical coupling means (C) for coupling these waves, characterized in that
– the first wavelength (of the pump wave) is situated in the vicinity of the wavelength of zero chromatic dispersion of the optical fibre material.
– the cut-off wavelength ($\lambda$c) of the fibre (FO) is selected with respect to the zero dispersion wavelength in such a way that the phase mismatching associated to the mode dispersion properties of the guide structure is zero for discrete wavelengths.
– the device comprises a thermostat container in which at least one length portion of said optical fibre of a predetermined length is disposed, and control means allowing to continuously modify the temperature of this container in such a way that the device becomes continuously tunable in said infrared wavelength spectrum.

3. A device according to claim 2, characterized in that the coupler (C) is intended to couple two optical fibres (F$_1$, F$_2$) which receive respectively the signal wave and the pumpwave.

4. A device according to any one of claims 2 to 3, characterized in that the pump wave generator (SP) is a YAG laser which emits at a wavelength centred on 1,319 $\mu$m.

5. A device according to any one of claims 2 to 3, characterized in that the signal wave generator (La) is a laser diode.

6. A device according to any one of claims 2 to 5, characterized in that said optical fibre of given length is subdivided into length portions (FO$_1$, FO$_2$) and that it comprises a thermostat container (ECT$_1$, ECT$_2$) associated to temperature control means (DCT$_1$, DCT$_2$) which are distinct for each one of the portions.

7. A device according to any one of claims 2 to 5, characterized in that, the signal wave generator (La) emitting a radiation at controllable wavelengths, said fibre of given length comprises a first length portion (FO$_1$) and a second length portion (FO$_2$), and that only one of these portions (FO$_2$) is disposed in a thermostat container (ECT) in order to match this portion to the natural opto-geometrical parameters of the other portion (FO$_1$).

8. A device according to any one of claims 2 to 7, characterized in that the temperature control means (DCT$_1$, DCT$_2$) of each thermostat container (ECT$_1$, ECT$_2$) impose in a continuously variable manner a temperature ranging from 20°C to +100°C.

9. A selective amplification device (AMPS) for a signal wave of a given wavelength, characterized in that it comprises a device according to any one of claims 2 to 8.

10. An amplification and regeneration device (AMPR) for a signal wave conveyed on an information transmission channel having optical fibres (F, F'), characterized in that it comprises a device according to any one of claims 2 to 8.

**Patentansprüche**

1. Abstimmbare Monomode-Lichtquelle, die auf einem nichtlinearen Vierphotoneneffekt durch Wechselwirkung mit einer starken Einschnürung einer Pumpwelle einer ersten Wellenlänge beruht, wobei diese Welle in eine unimodale Lichtleitfaser (FO) einer gegebenen Länge eingespeist wird, die sich in einem Wellenlängenspektrum des nahen Infrarotbereichs befindet, mit einem Generator (SP) zur Erzeugung der Pumpwelle und mit optischen Mitteln (C) zum Einkoppeln der erzeugten Welle in eine Eingangsfläche der Lichtleitfaser, dadurch gekennzeichnet, dass

– die erste Wellenlänge (der Pumpwelle) sich in der Nähe der Wellenlänge befindet, bei der das Material der Lichtleitfaser den chromatischen Dispersionswert Null besitzt,

– die Grenzwellenlänge ($\lambda$c) der Faser (FO) bezüglich der Wellenlänge entsprechend der Dispersion Null so gewählt ist, dass die Phasenfehlanpassung aufgrund der Modusdispersionseigenschaften der Struktur der Faser für diskrete Wellenlängen Null ist,

– die Lichtquelle einen Thermostatbehälter, in dem mindestens ein Abschnitt vorgegebener Länge der Lichtleitfaser angeordnet ist, und Mittel zur kontinuierlich veränderbaren Steuerung der Temperatur in diesem Behälter aufweist, so dass die Lichtquelle in dem Spektrum der Wellenlängen des Infrarotbereichs kontinuierlich abstimmbar wird.

2. Abstimmbare optische Verstärkeranordnung, die auf einem nicht-linearen Vierphotoneneffekt durch Wechselwirkung mit einer starken Einschnürung einer Pumpwelle einer ersten Wellenlänge, wobei diese Welle in eine unimodale Lichtleitfaser (FO) einer gegebenen Länge eingespeist wird, und auf einer Kopplung mit einer Signalwelle einer zweiten Wellenlänge beruht, wobei die Wellenlängen sich in einem Wellenlängenspektrum des nahen Infrarotbereichs befinden, mit einem Generator (SP) zur Erzeugung der Pumpwelle, einem Generator (a) zur Erzeugung der Signalwelle und optischen Mitteln (C) zur Kopplung der Wellen, dadurch gekennzeichnet, dass

– die erste Wellenlänge (der Pumpwelle) sich in der Nähe der Wellenlänge befindet, bei der das Material der Lichtleitfaser den chromatischen Dispersionswert Null besitzt,

– die Grenzwellenlänge ($\lambda$c) der Faser (FO) bezüglich der Wellenlänge entsprechend der Dispersion Null so gewählt ist, dass die Phasenfehlanpassung aufgrund der Modusdispersionseigenschaften der Struktur der Faser für diskrete Wellenlängen Null ist.,

– die Anordnung einen Thermostatbehälter, in dem mindestens ein Abschnitt vorgegebener Länge der Lichtleitfaser angeordnet ist, und Mittel zur kontinuierlich veränderbaren Steuerung der Temperatur in diesem Behälter aufweist, so dass die Anordnung in dem Spektrum der Wellenlängen des Infrarotbereichs kontinuierlich abstimmbar wird.

3. Anordnung nach Anspruch 2, dadurch gekennzeichnet, dass der Koppler (C) ein Koppler für zwei Lichtwellenleiter ($F_1$, $F_2$) ist, der die Signalwelle und die Pumpwelle zugeführt erhält.

4. Vorrichtung nach einem beliebigen der Ansprüche 2 bis 3, dadurch gekennzeichnet, dass der Generator (SP) zur Erzeugung der Pumpwelle ein YAG-Laser ist, der bei einer Wellenlänge sendet, die auf 1,319 $\mu$m zentriert ist.

5. Anordnung nach einem beliebigen der Ansprüche 2 bis 3, dadurch gekennzeichnet, dass der Generator zur Erzeugung der Signalwelle (La) eine Laserdiode ist.

6. Anordnung nach einem beliebigen der Ansprüche 2 bis 5, dadurch gekennzeichnet, dass die Lichtleitfaser einer gegebenen Länge in Abschnitte ($FO_1$, $FO_2$) unterteilt ist und dass die Vorrichtung einen Thermostatbehälter ($ECT_1$, $ECT_2$) und Temperatursteuermittel ($DCT_1$, $DCT_2$) zur getrennten Steuerung jedes Abschnitts aufweist.

7. Anordnung nach einem beliebigen der Ansprüche 2 bis 5, dadurch gekennzeichnet, dass für den Fall, dass die Signalwelle (La) Strahlungen von steuerbaren Wellenlängen aussendet, die Lichtleitfaser gegebener Länge einen ersten Abschnitt ($FO_1$) und einen zweiten Abschnitt ($FO_2$) besitzt und dass nur einer der Abschnitte ($FO_2$) in einem Thermostatbehälter (ECT) angeordnet ist, so dass dieser Abschnitt auf die natürlichen optogeometrischen Parameter des anderen Abschnitts ($FO_1$) abgestimmt wird.

8. Anordnung nach einem beliebigen der Ansprüche 2 bis 7, dadurch gekennzeichnet, dass die Mittel zur Steuerung der Temperatur ($DCT_1$, $DCT_2$) jedes Thermostatbehälters ($ECT_1$, $ECT_2$) eine kontinuierlich variable Steuerung der Temperatur in einem Bereich zwischen 20 und +100 °C bewirkt.

9. Anordnung zur selektiven Verstärkung (AMPS) einer Signalwelle einer gegebenen Wellenlänge, dadurch gekennzeichnet, dass sie eine Anordnung nach einem beliebigen der Ansprüche 2 bis 8 enthält.

10. Anordnung zur Verstärkung und Regeneration (AMPR) einer Signalwelle, die auf einem zur Informationsübertragung verläuft, dadurch gekennzeichnet, dass sie eine Anordnung nach einem beliebigen der Ansprüche 2 bis 8 enthält.

FIG_2

$\Delta\overline{\nu}(cm^{-1})$

1800
1700
1600 — $\lambda_p = 1,318\,\mu m$
1500 — $\lambda_p = 1,319\,\mu m$
      $\lambda_p = 1,32\,\mu m$
1400
      $\lambda_c = 1,225\,\mu m$
1300
      3%     $GeO_2$
1200
      $\Delta_n = 4,179\ 10^{-3}$
1100
      $a = 4,2586\,\mu m$
1000

900

$-20$  $0$  $20$  $40$  $60$  $80$  $100$  $T(°c)$

FIG_1

$\Delta\overline{\nu}(cm^{-1})$

$\lambda_c = 1,2\,\mu m$

1600
      $\lambda_c = 1,225\,\mu m$
1500
1400  $\lambda_c = 1,25\,\mu m$
1300
1200  $\lambda_c = 1,275\,\mu m$
1100
1000
900       3%     $GeO_2$
800       $\Delta_n = 4,18\ 10^{-3}$
700
600

$-20$  $0$  $20$  $40$  $60$  $80$  $100$  $T(°c)$

EP 0 187 058 B1

# FIG_3

# FIG_4

FIG_7

$\lambda_P = 1,319\,\mu m$

$\lambda(T = -19°C) = 1,4\,\mu m$

$\lambda'(T = 100°C) = 1,197\,\mu m$

$\lambda'(T = -19°C) = 1,25\,\mu m$

$\lambda(T = 100°C) = 1,475\,\mu m$

$\lambda'(T = 0°C) = 1,227$

$\lambda(T = 0°C) = 1,41\,\mu m$

$\lambda(\mu m)$

I

1,1   1,2   1,3   1,4   1,5

EP 0 187 058 B1

# FIG_5

# FIG_6

# FIG_8

# FIG_9

SP C FO₁ FO₂
Fs La ECT₁ ECT₂
DCT₁ DCT₂

# FIG_10

C FO₂ ECT₂
SP Fs La FO₁
DCT₂

# FIG_11

SS Fs D
Fe AMPS

# FIG_12

ST₁ AMPR ST₂
F F'